Europäisches Patentamt

European Patent Office

Office européen des brevets

(11) Publication number: **0 213 301**
A2

# (12) EUROPEAN PATENT APPLICATION

(21) Application number: **86108413.5**

(51) Int. Cl.⁴: **G 06 F 9/30**

(22) Date of filing: **20.06.86**

(30) Priority: **28.06.85 US 750819**

(43) Date of publication of application:
**11.03.87 Bulletin 87/11**

(84) Designated Contracting States:
**CH DE FR GB IT LI NL SE**

(71) Applicant: **Hewlett-Packard Company**
**P.O. Box 10301**
**Palo Alto California 94303-0890(US)**

(72) Inventor: **Baum, Allen J.**
**2310 Cornell Street**
**Palo Alto, CA 94306(US)**

(72) Inventor: **Miller, Terrence C.**
**169 Oak Court**
**Menlo Park, CA 94025(US)**

(72) Inventor: **Fotland, David A.**
**1148 White Cliff Drive**
**San Jose, CA 95129(US)**

(74) Representative: **Patentanwälte Kohler - Schwindling -**
**Späth**
**Hohentwielstrasse 41**
**D-7000 Stuttgart 1(DE)**

(54) Concurrent transfer and branch.

(57) In a computer device having a reduced instruction set architecture, frequently occurring operations are combined into a single instruction (110) in accordance with the invention, and the single instruction executes the combined operations simultaneously. Specifically, the frequently used instructions for moving data and then branching are combined into a single instruction (110) in a computer device in accordance with the preferred embodiment of the invention for concurrent execution. As a result, both code compaction and higher execution speed are achieved with the invention.

EP 0 213 301 A2

FIG 2

Method of Concurrently Transferring Data and Branching, and Computer Device for Performing this Method

In a prior art computer with microprogramming, the control section of such a computer generally is provided with an autonomous read-only storage. Each time a program instruction begins, the control unit generates an address to its read-only storage derived from the function or operation code of the instruction. This address locates what may be the first of a series of words which supply the control signals to the computer for carrying out the particular instruction being processed. Each instruction in effect generates a transfer to a microsubroutine associated with it, and the resultant step-by-step operation of the machine corresponds to the execution of a program on a very detailed level.

In such a computer in the prior art, program instructions generally comprise an operation code, i.e., the opcode, together with information relative to the location of the operands, that is, the data to be operated on. These operands sometimes may also have additional operational information. The length of the program instructions may be relatively long or relatively short depending on the quantity of data involved. The operating codes generally indicate the operation to be performed. Once the length of the operating code is established, it is possible to have only a certain fixed set of different operating codes and related program instructions. However, not all the operating codes which may theoretically be expressed with a certain number of bits, i.e., operating codes within the fixed set, are used to characterize program instructions for which the computer is provided with microprogramming resources. Generally, only a part or subset is used, and thus programming efficiency is degraded.

Also in a prior art computer, the memory of the computer provides the largest hardware cost. Therefore, the key to hardware speed and minimum size lies in efficient use of the memory. Fixed instruction length computers require the same number of bits for each instruction word regardless of the simplicity or complexity of the operation to be executed. As an example, many bits can be wasted in instructions which specify simple operations, while many instructions can be wasted in complex operations where an instruction's capability is limited by its length. Therefore, it is desired to design a computer with an instruction set which can perform all applications most efficiently.

To increase the efficiency of microprogramming in the prior art, the concept of optimizing compilers is used and implemented (1) to compile programming languages down to instructions that are as unencumbered as microinstructions in a large virtual address space and (2) to make the instruction cycle time as fast as the technology would allow. Computers having such optimized compilers are designed to have fewer instructions than those in the prior art, and what few instructions they do have are simple and would generally execute in one cycle. Such computers have been aptly named reduced instruction set computers (RISCs). Instructions that are part of a reduced instruction set in a RISC machine and that provide increased efficiency in a novel way have been invented and are described herein.

Specifically, in computers with fixed size instructions, even frequently occurring instructions for simple operations are of a fixed size. In contrast, those computers with variable length instructions would encode frequently occurring instructions for simple operations in small formats and thus substantially decrease the size of their codes. Thus, in the prior art, to increase code compression, variable length instructions are used. Unfortunately, by doing so, difficulty in fetching and decoding instructions also increases. Alternatively, the prior art can combine two operations into a single instructional format. These two operations are then executed serially. In this instance, added compression is obtained at the price of longer operation time.

In accordance with the preferred embodiment of the invention, frequently occurring operations are combined into a single instruction, and the single instruction executes both operations simultaneously. In the present case, the frequently used instructions for moving data and then branching are combined into a single instruction by the means and method in accordance with the preferred embodiment of the invention described herein. Hence, both code compaction and better execution speed are achieved with the invention.

## Brief Description of the Drawings

Figure 1 shows an instruction set for moving and branching in accordance with the invention.

Figure 2 shows an architecture for implementing the

3

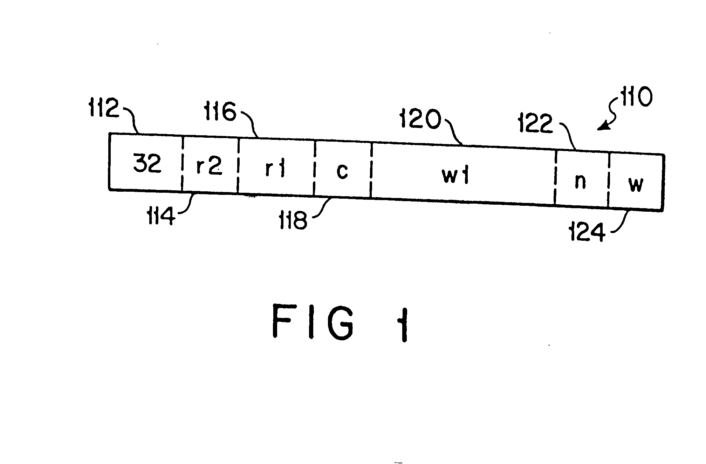

instruction set shown in Figure 1.

## Detailed Description of the Invention

To accomplish the goals of the invention, both move and branch instructions in a computer device in accordance with the invention have been defined so that a first operand, either a variable or a literal, can be moved to a second operand while simultaneously being compared against zero. When some selected condition is met as shown by the comparison, branching results. In other words, the contents of one register is moved to another register by copying it into the new register, and branching is made conditioned on the value moved.

This instruction for move and branch 110 is denoted as follows:

MOVB, c, n    r1, r2, wd

and has the format shown in Figure 1, namely,

32 / r2 / r1 / c / w1 / n / w

where:

32 is a 6-bit field code 112 identifying a move and branch operation;

r2 is a 5-bit field 114 specifying the target register "r2";

r1 is a 5-bit field 116 specifying the source register "r1";

c is a 3-bit field 118 specifying a condition;

w1 is an 11-bit field 120 specifying an offset;

n is a 1-bit field 122 specifying whether or not to nullify the next instruction; and

w is a 1-bit field 124 specifying the sign of the offset.

4

Operationally, the contents of a general register "r1" is copied into a general register "r2". If the condition "c" is satisfied by the value copied, the word displacement "wd" is assembled from the "w" and "w1" fields 120, 124 in the instruction, sign extended, and added to a program counter offset. The condition "c" is any extract or deposit conditions.

In the next instruction cycle, the instruction is then executed regardless of the truth or falsity of "c", unless nullification is selected. When nullification is specified, the instruction following a forward branch which is taken or the one following a backward branch which is not taken is nullified.

Specifically, the instruction set 110 proceeds as follows:

1. During a first cycle, T:

   a. copy the contents of register "1" into register "2";

   b. check the value of the contents copied and see if the condition "c" is satisfied;

   c. if satisfied, continue and:

      (1) assemble a 14-bit word, a 14-bit immediate data, from "w1" and "w" by concatenating "w" to the 11th bit of "w1", which in turn is concatenated to the first 10 bits of "w1", and make a logical left shift of 2 of the concatenation to result in "x";

      (2) extend the sign of the result "x" by extending "x" on the left with sign bits to a 32-bit quantity, taking the high-order bit of "x" as the sign bit;

      (3) assign the sign-extended result to "disp"; and

      (4) branch by assigning the current offset identifier with "disp" and 8 added to it to the offset identifier of the instruction to be executed during time T + 2, _i.e._, the cycle following the next cycle.

2. During the second cycle, T + 1: if nullification is specified in "n", nullify the instruction being executed during this cycle if the value moved satisfies the condition "c" and the displacement "disp" is positive or zero, or if the value moved does not satisfy the condition "c" and the displacement "disp" is negative.

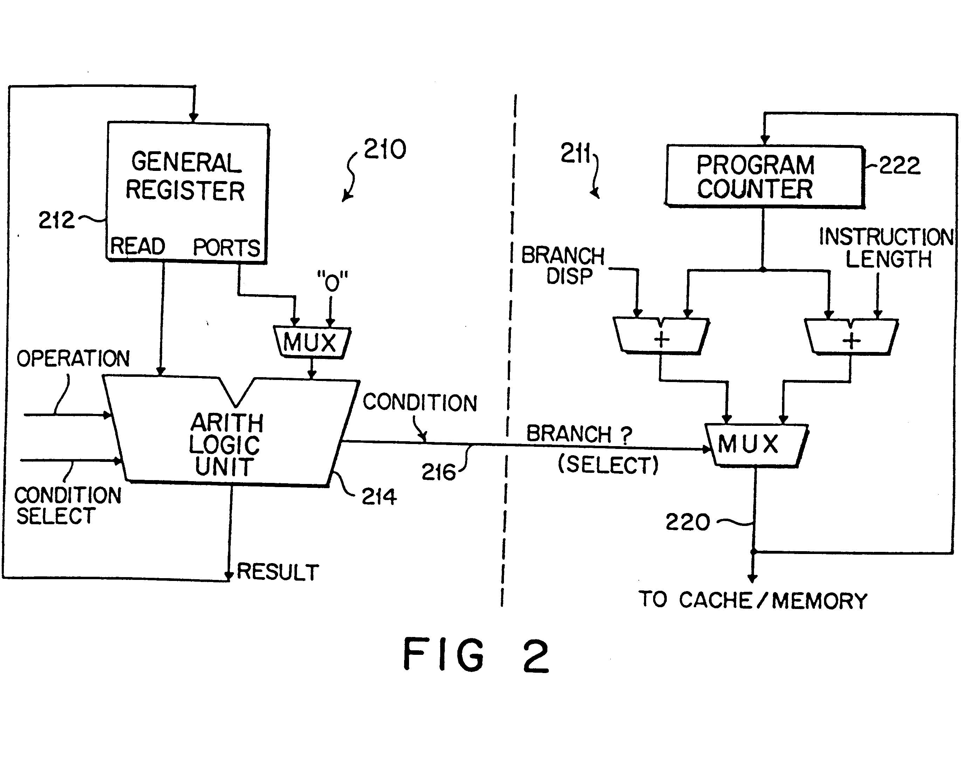

An example of the architecture in a computer device for implementing the instruction for move and branch 110 is depicted in Figure 2. In the arithmetic-logic unit (ALU) portion 210, contents of register "1" are read from a general register 212 and are tested in an ALU 214. The contents of register "1" (not shown) are copied into another register, register "2" (not shown). Meanwhile, the value of the contents of register "1" are tested to see whether a set of preselected conditions 216 are met. If so, a word displacement "wd" 220 derived from fields 120, 124 in the instruction set 110 is added to a program counter 222 in an instruction address portion 211 of the computer device. In the next execution cycle of the computer device, nullification takes place if it is specified. In other words, the instruction following a forward branch which is taken or the one following a backward branch which is not taken is nullified. In this way, branching is determined by the value from the ALU 214 meeting the preselected conditions 216.

CLAIMS:

1.  A method of concurrently transferring data and branching in a computer device comprising the steps of:

transferring the data of a first register to a second register;

comparing the data with a set of predetermined conditions; and

selecting an instruction to be executed subsequently in response to a selected condition and selected displacement;

wherein said steps of transferring, comparing and selecting are performed within a single execution cycle of said computer device.

2.  The method as in claim 1, wherein said step of selecting further comprises selecting said instruction to be executed next.

3.  The method as in claim 1, wherein said step of selecting further comprises selecting said instruction to be executed after at least one intervening instruction.

4.  The method as in any one of claims 1 to 3, further comprising the step of nullifying a subsequent operation in said computer device in response to said step of comparing.

5.  The method as in any one of claims 1 to 4, wherein said steps are in response to a single instruction of said computer device.

6.  A computer device for performing the method according to any one of the preceding claims, said computer having a set of reduced instructions, comprising:

./.

an instruction (110) further comprising:

(a) a first field (116) for specifying a first register whose contents are to be transferred;

(b) a second field (114) for specifying a second register to which said contents are to be transferred;

(c) a third field (118) for specifying a predetermined condition; and

(d) a fourth field (120) for specifying a displacement; wherein operations specified by said instruction are executed within one cycle;

a first means responsive to said instruction for transferring contents of said first register to said second register;

a second means responsive to said instruction for providing an output indicative of satisfaction of said predetermined condition by said contents of said first register; and

a third means responsive to said instruction for determining a location of an instruction to be executed subsequently.

7. The computer device as in claim 6, wherein said third means is for determining a location of an instruction to be executed next.

8. The computer device as in claim 6, wherein said third means is for determining a location of an instruction to be executed after at least one intervening instruction.

9. The computer device as in any one of claims 6 to 8, wherein said instruction (110) further comprises a fifth field (122) for determining a nullification of an operation and said computer device further comprises a fourth means for nullifying at a subsequent cycle of said computer device an operation in response to said fifth field and said output from said second means.

0213301

| 32 | r2 | r1 | c | w1 | n | w |

FIG 1

FIG 2

GENERAL REGISTER 212 210

READ PORTS

"O"

MUX

OPERATION

ARITH LOGIC UNIT 214

CONDITION SELECT

RESULT

CONDITION 216

BRANCH ? (SELECT)

211

PROGRAM COUNTER 222

BRANCH DISP

INSTRUCTION LENGTH

+  +

MUX

220

TO CACHE/MEMORY

2/2

0213301

H 21 EP